Europäisches Patentamt

European Patent Office

Office européen des brevets

(11) Veröffentlichungsnummer: **0 487 827 A2**

# EUROPÄISCHE PATENTANMELDUNG

(21) Anmeldenummer: **91112593.8**

(22) Anmeldetag: **26.07.91**

(51) Int. Cl.5: **B29C 45/16**

(30) Priorität: **30.11.90 DE 4038153**

(43) Veröffentlichungstag der Anmeldung:
**03.06.92 Patentblatt 92/23**

(84) Benannte Vertragsstaaten:
**BE DK FR GB IT NL**

(71) Anmelder: **Klöckner Ferromatik Desma GmbH
Riegeler Strasse 4
W-7831 Malterdingen(DE)**

(72) Erfinder: **Bark, Manfred
Langer Berg 23
W-2806 Oyten(DE)**
Erfinder: **Rebers, Günter, Dipl.-Ing.
Asternweg 2
W-2807 Achim-Baden(DE)**

(74) Vertreter: **Kiefer, Winfried, Dipl.-Phys.
Klöckner-Werke Aktiengesellschaft
Patentabteilung Klöcknerstrasse 29
W-4100 Duisburg 1(DE)**

(54) **Verfahren, Werkzeug, Werkzeugstation und Anlage zum Anformen von mehrschichtigen Schuhsohlen an Schuhschäfte.**

(57) Schuhsohlen mit einer Laufsohle und mindestens eine Zwischensohle, wobei die Laufsohle in Felder unterteilt ist, werden an Schuhschäfte in der Weise angeformt, daß in einem ersten Verfahrensschritt die zueinander distanzierten Felder der Laufsohle über Angußbohrungen im Bereich der Lauffläche der zu formenden Felder geformt werden. In einem zweiten Verfahrensschritt wird in dem zwischen dem Schaft und den Feldern der Laufsohle gebildeten Zwischenraum, sowie in den Zwischenräumen zwischen den Feldern die Zwischensohle geformt. Es können auch in einem ersten Verfahrensschritt die zueinander distanzierten Felder der Laufsohle über Angußbohrungen im Bereich der Lauffläche der zu formenden Felder geformt werden, wobei an den Schuhschaft die Schaftsohle angeformt wird. In einem zweiten Verfahrensschritt wird in dem zwischen der Schaftsohle und den Feldern der Laufsohle gebildeten Zwischenraum, sowie in den Zwischenräumen zwischen den Feldern die Zwischensohle geformt. Das Werkzeug (die Form) weist einen höhenverstellbaren Drehkopf mit mindestens einem Leisten und gegebenenfalls einem Gegenstempel, mindestens zwei Seitenformteile sowie ein Werkzeugteil zum Formen der Laufsohlen auf. Unterhalb der Seitenformteile ist eine höhenverstellbare Werkzeugnahme für das Werkzeugteil zum Formen der Laufsohlen angeordnet. Das Werkzeugteil ist eine Bodenstempelplatte und der Boden der Bodenstempelplatte weist mindestens eine Angußbohrung im Bereich der Lauffläche der zu formenden Laufsohle auf.

Die Erfindung betrifft ein Verfahren zum Anformen von eine Laufsohle und mindestens eine Zwischensohle aufweisenden Schuhsohlen an Schuhschäfte, wobei die Laufsohle in Felder unterteilt ist bzw. Durchbrüche aufweist. Sie betrifft weiterhin ein Werkzeug zum Anformen von Sohlen an Schuhschäfte, insbesondere zum Durchführen des Verfahrens, wobei das Werkzeug einen höhenverstellbaren Drehkopf mit mindestens einem Leisten und gegebenenfalls einem Gegenstempel, mit mindestens zwei Seitenformteilen sowie mit einem Werkzeugteil zum Formen der Laufsohlen aufweist. Weiterhin betrifft die Erfindung eine Anlage zum Anformen von Schuhsohlen an Schuhschäfte mit diesen Werkzeugen, sowie Werkzeugstationen für Drehtischanlagen bzw. Fertigungsstraßen zum Anformen von eine Laufsohle und mindestens eine Zwischensohle aufweisenden Sohlen an Schuhschäfte, wobei die Werkzeugstation einen Leistendrehkopf mit mindestens einem Leisten und gegebenenfalls einen Gegenstempel, sowie mindestens ein Paar Seitenformteile und ein Werkzeugteil zum Formen der Laufsohlen hat.

Unter Schuhschäften sind im Rahmen der Erfindung vorgefertigte Schuhschäfte aus Leder, aus Textilmaterial, aus Elastomer und aus Thermoplasten zu verstehen sowie weiterhin Schuhschäfte, die vor dem Formen und Anformen der Schuhsohlen in dem als Schuhform bezeichneten Werkzeug hergestellt werden und an die anschließend die Sohlen angeformt werden.

Unter Schuhschäften sind weiterhin im Rahmen der Erfindung aus einem Thermoplast bestehende Schuhschäfte zu verstehen, die z.B. entweder aus plastifiziertem granuliertem Polyurethan, Polyvinylchlorid usw. gespritzt oder aus zu Polyurethan ausreagierenden Gemischen aus Isocyanat und Polyol hergestellt werden.

Unter Schuhschäften sind im Sinne der Erfindung die üblichen Schuhschäfte für Halbschuhe, Schaftschuhe sowie weiterhin die Schuhschäfte von Stiefeletten, Sportschuhen, Fußballstiefeln, generell Stiefeln, sowie weiterhin von Arbeitsschuhen und Arbeitsstiefeln zu verstehen.

Im Rahmen der Erfindung sind unter Schuhsohlen Schuhsohle aus einem thermoplastischen Material wie z.B. PVC oder aus granuliertem plastifiziertem Polyurethan zu verstehen, Schuhsohlen, die aus zu Polyurethan ausreagierenden Gemischen aus Isocyanat und Polyol hergestellt werden, werden nicht in Betracht gezogen.

Im einfachsten Falle weisen Schuhe, Stiefel usw. eine aus nur einem Material bestehende angeformte Sohle, d.h. eine Laufsohle, aus abriebfestem Material auf.

Abriebfestes Material hat im allgemeinen den Nachteil, daß es praktisch keine dämpfenden Eigenschaften hat, so daß beim Gehen oder Laufen durch die Unebenheiten des Geländes ausgelöste Stöße bzw. Erschütterungen praktisch ungedämpft an die Wirbelsäule weitergeleitet werden. Aus diesem Grunde werden derartige einschichtige Sohlen vorzugsweise für Arbeitsschuhe und Arbeitsstiefel vorgesehen.

Um eine Dämpfung der Schuhsohlen zu erzielen, ist es bekannt, zwischen der Laufsohle und dem Schuhschaft eine Zwischensohle vorzusehen, die zwar eine geringe Abriebfestigkeit aufweist, jedoch hohe Elastizität- und Dämpfungseigenschaften hat und die deshalb auch als Komfortsohle bezeichnet wird.

Diese von Sohlen mit zweischichtigem Aufbau bekannten Zwischensohlen werden im folgenden als Schaftsohlen bezeichnet, da sie die Verbindung der Laufsohle mit dem Schaft herstellen. Im folgenden kann diese Schaftsohle auch aus nicht dampfendem Material bestehen.

Es sind weiterhin zweischichtige Sohlen aus Gummi bekannt (DE-AS 20 48 596), die in der Weise an Schuhschäfte angeformt werden, daß in einem ersten Verfahrensschritt an einen Schuhschaft eine Schaft- bzw. Komfortsohle aus einer dämpfenden Gummimasse angeformt und in einem zweiten Verfahrensschritt an diese Komfort- bzw. Schaftsohle anschließend eine abriebfeste jedoch geringe bzw. praktisch keine dämpfende Wirkung zeigende Laufsohle aus abriebfestem Material angespritzt wird.

Es ist weiterhin bekannt (DE-OS 1 485 987), an einen Schuhschaft, ebenfalls in einem ersten Verfahrensschritt zunächst eine Komfort- bzw. Schaftsohle anzuformen und anschließend in einen zweiten Verfahrensschritt in eine während des Anformens dieser Schaft- bzw. Komfortsohle gebildete Aussparung, die vom Material der Komfort- bzw. Schaftsohle rahmenartig eingefaßt wird, das Material für die Laufsohle einzubringen. Falls Materialien von verschiedener Farbe verwendet werden, weist die Lauffläche einen eingerahmten Bereich von der Farbe des zuletzt angebrachten Materials auf.

Es ist weiterhin bekannt DDR-PS 64 882, zunächst die Laufsohle mit einem seitlichen Rand herzustellen, auf die obere Begrenzung des seitlichen Randes den auf einem Leisten angeordneten Schuhschaft anzuordnen und durch in der Laufsohle vorgesehene Durchbrüche das Material für die Schaft- bzw. Komfortsohle dem von der Laufsohle und dem Schaftboden begrenzten Zwischenraum zuzuführen.

Es ist auch bekannt (DDR-PS 64 882), aus einem Materialabschnitt zum Beispiel eine Gummiplatte eine Laufsohle zu formen und anschließend die Schaftsohle zu bilden.

Es ist weiterhin bekannt (DE-AS 20 22 118), zweischichtige Sohlen aus zu Polyurethan ausreagierenden Gemischen aus Isocyanat und Polyol in der Weise herzustellen, daß in einem ersten Verfahrensschritt an einen Schuhschaft eine Komfort- bzw. Schaftsohle angeformt wird, und nach Ausreagieren des Gemisches zu Polyurethan in einem zweiten Verfahrensschritt die Laufsohle angeformt wird.

Es ist auch bekannt (DBP 22 41 493) beim Herstellen von zweischichtigen Sohlen aus zu Polyurethan ausreagierenden Gemischen aus Isocyanat und Polyol zunächst die Laufsohle zu formen und anschließend zwischen einem zwischen der Laufsohle und dem aufgeleisteten Schaft gebildeten Zwischenraum die Komfort- bzw. Schaftsohle zu bilden.

Zum Formen der beiden Sohlenschichten wird das ausreagierende Gemisch in entsprechender Menge einem Formenhohlraum bzw. Werkzeughohlraum zugeführt, dessen Volumen größer ist als das Volumen der Lauf- bzw. Zwischensohle. Diese Volumina werden nach dem Zuführen des jeweiligen ausreagierenden Gemisches auf das Volumen der betreffenden Sohlenschicht verkleinert.

Allen diesen Verfahren ist gemeinsam, daß zunächst die härtere bzw. die abriebfeste Sohle hergestellt und erst anschließend die elastische d.h. in bezug auf die Laufsohle weichere Sohlenschicht, da während des Anformens der Laufsohle an eine bereits hergestellte Komfort- bzw. Schaftsohle das weichere Material der Komfort- bzw. Schaftsohle unkontrolliert komprimiert bzw. verdichtet werden würde.

Die als Formen bezeichneten Werkzeuge zum Herstellen von Schuhsohlen an Schuhschäfte bezeichneten Werkzeuge weisen im einfachsten Falle zwei jeweils eine Ausfräsung aufweisende Seitenformteile, einen Bodenstempel und einen Leisten auf (DE-AS 20 48 596, DE-PS 1 729 141, DE-0S 3 516 280).

In Schließstellung der Seitenformteile bilden die Ausfräsungen einen Durchbruch, der einen Formenhohlraum für die an einen Schuhschaft anzuformende Sohle seitlich begrenzt.

Der in dem Durchbruch höhenverstellbar geführte Bodenstempel bildet die untere Begrenzung des Formenhohlraums und der auf die in Schließstellung befindlichen Seitenformteile anzuordnende, auf dem Leisten aufgezogene Schuhschaft bildet die obere Begrenzung des Formemhohlraums.

Die Seitenformteile weisen in ihrer Anlagefläche senkrecht zur Bewegungsrichtung des Bodenstempels verlaufende nutenartige Ausnehmungen auf, die in der Schließstellung der Seitenformteile Angußkanäle bilden, über die zum Formen der Laufsohle bzw.Schaftsohle das betreffende Material zugeführt wird.

Bei dieser Ausbildung des Werkzeuges verlaufen die Trennfläche zwischen der Schaftsohle und der Laufsohle und die Lauffläche der Laufsohle in parallelen Ebenen zueinander, und stimmen mit der räumlichen Geometrie der Fläche des höhenverstellbaren Bodenstempels überein.

Es ist weiterhin bekannt (DDR-PS 64 882, DBP 2 241 493), den Leisten für einen Schuhschaft auf einem höhenverstellbaren Drehkopf anzuordnen, der zusätzlich zum Leisten noch einen Gegenstempel aufweist.

Zum Formen der Laufsohle taucht der Gegenstempel in den Durchbruch ein und bildet die obere Begrenzung des Formenhohlraums für die Laufsohle, während des Formens der Laufsohle sperrt der Gegenstempel den Angußkanal für die Zufuhr von Material für die Schaftsohle.

Nach der Zufuhr des Materials für die Laufsohle wird der Bodenstempel nach dem Verfestigen der auf ihr angeordneten Laufsohle um einen vorgegebenen Betrag hochgefahren und sperrt die Angußbohrung für die weitere Zufuhr von Material für die Zwischensohle.

Nachdem die Laufsohle sich hinreichend verfestigt hat, werden die Seitenformteile auseinandergefahren, der Drehkopf nach oben verfahren und verschwenkt, so daß der Leisten mit dem aufgeleisteten Schuhschaft in Richtung zu der auf dem Bodenstempel angeordneten Laufsohle zeigt.

Nach Schließen der Seitenformteile wird der Drehkopf verfahren, so daß der auf dem Leisten aufgezogene Schuhschaft eine abgedichtete obere Begrenzung des Formenhohlraums für die zu formende Schaftsohle bildet.

Über die Angußbohrung für die Zwischensohle wird das Material für die Zwischen- bzw. Komfortsohle zugeführt.

Anschließend wird der Drehkopf mit dem fertigen Schuh hochgefahren und der fertige Schuh entleistet.

Es sind weiterhin Werkzeuge mit einem Drehkopf bekannt, die zwei Bodenstempel aufweisen. Beide Bodenstempel bilden eine höhenverstellbare und verschwenkbare Baueinheit, die als verschwenkbarer Bodenstempel bezeichnet wird.

Durch den Einsatz des Gegenstempels und des einen Bodenstempels wird eine Zwischensohle und anschließend durch Austausch des Bodenstempels die Laufsohle geformt und zuletzt durch Austausch des Gegenstempels gegen den Leisten mit dem aufgezogenen Schuhschaft die Schaftsohle geformt.

Auf diese Weise wird eine dreischichtige Sohle an einem Schuhschaft angeformt.

Generell kann die Laufsohle mit Durchbrüchen hergestellt werden, in die das Material der anschließend hergestellten Zwischenschicht eindringt, so daß die Lauffläche der Laufsohle gegebenenfalls Bereiche unterschiedlicher Farbe aufweist.

Es ist weiterhin bekannt (US-PS 4 090 831) zwei Paar Seitenformteile in unterschiedlicher Höhe übereinander anzuordnen.

Die beiden Seitenformteile des oberen Paares arbeiten in der oben beschriebenen Weise mit einem auf einem Leisten aufgezogenen Schuhschaft und einer auf einem Bodenstempel angeordneten Laufsohle zum Formen der Schaftsohle zusammen.

Zum Formen der Laufsohle kommen die beiden Seitenformteile des unteren Paares der Seitenformteile zum Einsatz, die auf ihrer zum oberen Paar der seitenformteile zeigenden Stirnseite jeweils einen abgewinkelten Schenkel aufweisen. In Schließstellung der unteren Seitenformteile schließen die beiden abgewinkelten Schenkel den Durchbruch in Richtung zu den oberen Seitenformteilen und haben während des Formens der Laufsohle die Funktion eines Gegenstempels.

Während des Formens der Laufsohle arbeitet der Bodenstempel mit den in Schließstellung befindlichen unteren Seitenformteilen zusammen, die anschließend in ihre Offenstellung gebracht werden, so daß der Bodenstempel mit der auf ihm geformten Laufsohle in die Arbeitsstellung gebracht werden kann, in der er mit den oberen Seitenformteilen zum Formen der Schaftsohle zusammenarbeiten kann.

Diese Werkzeuge werden mit Antriebselementen zu Arbeitsstationen zusammengefaßt, die zu mehreren in einer Reihe zu Fertigungsstraßen oder zu mehreren auf Drehtischen zu Drehtischanlagen angeordnet werden.

Diese Fertigungsstraßen und Drehtischanlagen ermöglichen im Prinzip rationelle Fertigungszeiten für Schuhe, Stiefel und dgl.

Um diese Zeiten weiter herabzusetzen, ist es bekannt (DE-PS 35 38 721), die Schuhschäfte nicht mehr an den Drehtischanlagen manuell auf die Leisten der Drehköpfe aufzuziehen und nach dem Anformen der Sohlen an die Schäfte die fertigen Schuhe ebenfalls manuell zu entleisten, vielmehr werden die auf Leisten aufgezogenen Schuhschäfte mit einem Endlosförderer an die Drehtischanlage transportiert und von einem Roboter mit den Leistenaufnahmen der Drehköpfe verriegelt. Anschließend werden die fertigen Schuhe mit den Leisten vom Roboter an das Förderband übergeben.

An weiteren Arbeitsstationen des Endlosförderbandes werden manuell die Schuhschäfte auf die Leisten aufgezogen und ebenfalls manuell entleistet, sowie die abschließenden Arbeiten wie zum Beispiel Entgraten durchgeführt.

Die Fertigungszeiten werden bisher im wesentlichen dadurch bestimmt, daß erst nach einem hinreichenden Verfestigen des Materials der geformten Laufsohle bzw. Zwischen- bzw. Schaftsohle die weiteren Sohlenschichten geformt werden können. Generell werden die Sohlenschichten nacheinander geformt.

Weiterhin ist der bauliche Aufwand für die Arbeitsstationen erheblich, falls zwei oder drei Sohlenschichten geformt werden sollen.

Die Erfindung geht davon aus, daß beim Anformen von Schuhsohlen aus plastifiziertem thermoplastischem Material erhebliche Drücke dann erforderlich sind, wenn die Angußkanäle in den Werkzeugteilen sehr lang sind. Dies ist zum Beispiel der Fall, wenn die Laufsohle in mehrere Felder unterteilt ist oder Sportschuhe mit Nocken gefertigt werden.

Der Erfindung liegt deshalb die Aufgabe zugrunde, ein Verfahren zu schaffen bzw. ein Werkzeug zum Anformen von Sohlen an Schuhschäfte so auszubilden, daß die Angußbohrungen, über die das plastifizierte thermoplastische Material dem Werkzeug zum Formen der Laufsohle zugeführt wird, möglichst klein sind.

Weiterhin liegt der Erfindung die Aufgabe zugrunde, die Werkzeuge bzw. Werkzeugstationen so auszubilden, daß der konstruktive Aufwand, insbesondere von der Antriebsseite, herabgesetzt ist.

Die Aufgabe, ein Verfahren zu schaffen, wird für Schuhe mit einer in Felder unterteilten Laufsohle und einer Zwischensohle dadurch gelöst,daßin einem ersten Verfahrensschritt die zueinander distanzierten Felder der Laufsohle über Angußbohrungen im Bereich der Lauffläche der zu formenden Felder geformt werden und in einem zweiten Verfahrensschritt in dem zwischen dem Schaft und den Feldern der Laufsohle gebildeten Zwischenraum, sowie in den Zwischenräumen zwischen den Feldern die Zwischensohle geformt wird und für die Schuhe, die eine Schaftsohle, eine Laufsohle und eine Zwischensohle aufweisen dadurch gelöst, daß in einem ersten Verfahrensschritt die zueinander distanzierten Felder der Laufsohle über Angußbohrungen im Bereich der Lauffläche der zu formenden Felder geformt werden und an den Schuhschaft die Schaftsohle angeformt wird und in einem zweiten Verfahrensschritt in dem zwischen der Schaftsohle und den Feldern der Laufsohle gebildeten Zwischenraum, sowie in den Zwischenräumen zwischen den Feldern die Zwischensohle geformt wird.

Entsprechend wird diese Aufgabe für Schuhe gelöst, deren Laufsohle Durchbrüche aufweist, die vom Material der Zwischensohle bis in die Lauffläche ausgefüllt sind, daß in einem ersten Verfahrensschritt die Durchbrüche aufweisende Laufsohle über Angußbohrungen im Bereich der Laufsohle der zu formenden Laufsohle geformt wird und in einem zweiten Verfahrensschritt in dem zwischen dem Schaft und der Laufsohle gebildeten Zwischenraum und in den Durchbrüchen die Zwischensohle geformt wird bzw. in einem ersten Verfahrensschritt die Durchbrüche aufweisende Laufsohle über Angußbohrungen im Bereich der Lauffläche der zu formenden Laufsohle geformt wird und die Schaftsohle an den Schaft angeformt wird und in einem zweiten Verfahrensschritt in den zwischen der Schaftsohle und der Laufsohle gebildeten Zwischenraum und in den Durchbrüchen die Zwischensohle geformt wird.

Zum Durchführen der erfindungsgemäßen Verfahren kommt ein Werkzeug zum Einsatz, das einen höhenverstellbaren Drehkopf mit mindestens einem Leisten und gegebenenfalls einem Gegenstempel, mit mindestens zwei Seitenformteilen sowie mit einem Werkzeugteil zum Formen der Laufsohlen aufweist, und ist erfindungsgemäß in der Weise ausgebildet, daß unterhalb der Seitenformteile eine höhenverstellbare Werkzeugaufnahme für das Werkzeugteil zum Formen der Laufsohlen angeordnet ist, das Werkzeugteil eine Bodenstempelplatte ist und der Boden der Bodenstempelplatte mindestens eine Angußbohrung im Bereich der Lauffläche der zu formenden Laufsohle aufweist bzw. daß unterhalb der Seitenformteile eine höhenverstellbare Werkzeugaufnahme für in eine in ihr verschiebbare bzw. verschwenkbare Zwischenplatte angeordnet ist, unterhalb der höhenverstellbaren Werkzeugaufnahme für die Zwischenplatte eine höhenverstellbare Werkzeugaufnahme für das Werkzeugteil zum Formen der Laufsohlen angeordnet ist, das Werkzeugteil eine Bodenstempelplatte ist und der Boden der Bodenstempelplatte mindestens eine Angußbohrung aufweist und im Bereich der Lauffläche der zu formenden Laufsohle mündet.

In völliger Abkehr vom Stand der Technik wird vom Einsatz eines Bodenstempels - er besteht bekanntlich im Prinzip aus einer Bodenstempelplatte und einer Kolbenstange - abgesehen, so daß mit Ausnahme des von der Werkzeugaufnahme übergriffenen Randbereichs über die gesamte Bodenfläche Angußbohrungen vorgesehen werden können, die die Bodenstempelplatte im wesentlichen senkrecht durchsetzen.

Entsprechend wird das Plastifizier- und Einspritzaggregat ausgebildet, so daß über die die Bodenstempelplatte durchsetzenden Angußbohrungen das plastifizierte thermoplastische Material eingespritzt werden kann.

In weiterer Ausgestaltung dieses erfindungsgemäßen Prinzips weist der Gegenstempel Stege auf, die mit der Bodenstempelplatte den Formenraum für die zu bildende Laufsohle in eine vorgegebene Anzahl von Bereichen unterteilen, wobei in jeden Bereich mindestens eine Angußbohrung der Bodenstempelplatte mündet.

Gemäß einem zweiten Lösungsprinzip ist unterhalb der Seitenformteile eine höhenverstellbare Werkzeugaufnahme für in eine in ihr verschiebbare bzw. verschwenkbare Zwischenplatte angeordnet, wobei unterhalb der höhenverstellbaren Werkzeugaufnahme für die Zwischenplatte eine höhenverstellbare Werkzeugaufnahme für das Werkzeugteil zum Formen der Laufsohlen angeordnet ist, das Werkzeugteil eine Bodenstempelplatte ist und der Boden der Bodenstempelplatte mindestens eine Angußbohrung aufweist und im Bereich der Lauffläche der zu formenden Laufsohle mündet.

Erfindungsgemäß kann in einer weiteren Ausgestaltung dieses zweiten Lösungsprinzips der Gegenstempel Stege aufweisen, die mit der Bodenstempelplatte den Formenraum für die zu bildende Laufsohle in eine vorgegebene Anzahl von Bereichen unterteilen, wobei in jeden Bereich mindestens eine der Angußbohrungen der Bodenstempelplatte mündet.

Durch die erfindungsgemäße Anordnung der Bodenstempelplatte in einer Werkzeugaufnahme bzw. der Bodenstempelplatte und der Zwischenplatte in jeweils einer Werkzeugaufnahme, ergibt sich ein geringer baulicher Aufwand für das Werkzeug bzw. die Werkzeugstation.

In einer weiteren Ausgestaltung der Erfindung sind die Seitenformteile ebenfalls in einer Werkzeugaufnahme angeordnet.

Erfindungsgemäß werden generell sämtliche Werkzeugteile - die Bodenstempelplatte, die beiden Seitenformteile, der Leisten mit dem Gegenstempel - jeweils in einer höhenvestellbaren Werkzeugaufnahme angeordnet, so daß ein modularer Aufbau gegeben ist.

Zur Erzielung eines möglichst einfachen Aufbaus des Werkzeugs bzw. der Werkzeugstation sind in einer weiteren Ausgestaltung der Erfindung die höhenverstellbaren Werkzeugaufnahmen der Bodenstempelplatte, gegebenenfalls der Zwischenplatte, sowie der Seitenformteile auf einer gemeinsamen Führung angeordnet, auf der die Werkzeugaufnahmen entweder zueinander verschiebbar angeordnet, wobei die Werkzeugaufnahme für die Seitenformteile gegebenenfalls auf der Führung verriegelbar ist.

In einer noch weiteren Ausgestaltung der Erfindung ist auf der Führung zwischen den Werkzeugaufnahmen jeweils eine Druckfeder angeordnet, wobei mindestens die Werkzeugaufnahme für die Bodenplatte einen Antrieb aufweist.

Erfindungsgemäß ist der Antrieb ein pneumatischer Zylinder, hydraulischer Zylinder bzw. ein Kniehebel.

Durch die Kombination der Druckfedern zwischen den Werkzeugaufnahmen und dem Kniehebel ergibt sich eine besonders einfache konstruktive Lösung mit geringem baulichen Aufwand.

Mit diesen Werkzeugen ist es ohne weiteres möglich, Schuhansohlungsanlagen nach dem Modulsystem mit geringem konstruktiven und geringem steuerungstechnischem Aufwand zu schaffen.

Gemäß einem ersten Ausführungsprinzip weist die Anlage zum Anformen von Schuhsohlen einen Drehtisch auf, hat eine vorgegebene Anzahl von Arbeitsstationen mit Werkzeugen, wobei für den höhenverstellbaren Drehkopf eines jeden Werkzeuges ein auf dem Drehtisch angeordnetes Bauteil und am Drehtisch eine Führung für die Werkzeugaufnahmen vorgesehen ist.

Gemäß einem zweiten Ausführungsprinzip ist die Anlage zum Anformen von Schuhsohlen eine Fertigungsstraße, hat eine vorgegebene Anzahl von Arbeitsstationen mit Werkzeugen, wobei der höhenverstellbare Drehkopf eines jeden Werkzeuges an einem Bauteil der Arbeitsstation befestigt ist und unterhalb des Bauteils die Führung für die Werkzeugaufnahmen angeordnet ist.

Die Erfindung bezieht sich auch auf eine Werkzeugstation für Drehtischanlagen bzw. Fertigungsstraßen zum Anformen von eine Laufsohle und mindestens eine Zwischensohle aufweisenden Sohlen an Schuhschäfte, wobei die Werkzeugstation einen Leistendrehkopf mit mindestens einem Leisten und gegebenenfalls einen Gegenstempel, sowie mindestens ein Paar Seitenformteile und ein Werkzeugteil zum Formen der Laufsohlen hat und ist erfindungsgemäß dadurch gekennzeichnet, daß die Werkzeugstation unterhalb des um seine Achse verschwenkbaren Drehkopfes eine Werkzeugaufnahme für die Seitenformteile und eine Werkzeugaufnahme für das Werkzeugteil zum Formen der Laufsohle hat und die Werkzeugaufnahmen auf einem Führungsprofil der Werkzeugstation höhenverstellbar angeordnet sind.

Die Erfindung bezieht sich auch auf eine Werkzeugstation für Drehtischanlagen bzw. Fertigungsstraßen zum Anformen von eine Laufsohle und mindestens eine Zwischensohle aufweisenden Sohlen an Schuhschäfte, wobei die Werkzeugstation einen Leistendrehkopf mit mindestens einem Leisten und gegebenenfalls einen Gegenstempel, sowie mindestens ein Paar Seitenformteile und ein Werkzeugteil zum Formen der Laufsohlen hat und ist erfindungsgemäß dadurch gekennzeichnet, daß die Werkzeugstation unterhalb des höhenverstellbaren und um seine Achse verschwenkbaren Drehkopfes eine auf einem Führungsprofil der Werkzeugstation arretierbare Werkzeugaufnahme für die Seitenformteile hat, eine Werkzeugaufnahme für das Werkzeugteil zum Formen der Laufsohle hat und die Werkzeugaufnahme für das Werkzeugteil zum Formen der Laufsohlen auf dem Führungsprofil der Werkzeugstation höhenverstellbar angeordnet ist.

Generell ist erfindungsgemäß das Werkzeugteil zum Formen der Laufsohlen eine Bodenstempelplatte mit mindestens einer in dem Boden der Bodenstempelplatte angeordneten Angußbohrung im Bereich der Lauffläche.

In einer noch weiteren Ausgestaltung der Erfindung ist zwischen den Seitenformteilen bzw. zwischen der Werkzeugaufnahme für die Seitenformteile und der Werkzeugaufnahme für die Bodenstempelplatte eine weitere Werkzeugaufnahme für eine Zwischenplatte zum Anformen einer Schaftsohle an einen Schuhschaft und zum Formen einer Laufsohle mit der Bodenstempelplatte angeordnet ist und daß die Zwischenplatte in ihrer Werkzeugaufnahme durch Verschwenken oder Verschieben in bzw. außer Eingriff mit anderen Werkzeugteilen bringbar ist.

Es kommen die üblichen Einrichtungen zum Plastifizieren der Thermoplaste zum Einsatz mit dem Unterschied, daß die Düse derart gestaltet ist, daß durch ein axiales Verschieben und ein höhenverstellbares Verschieben die Düsen mit den Angußbohrungen der Bodenstempelplatte in Eingriff gebracht werden können und die weiteren Einrichtungen zum Plastifizieren, die mit den weiter konventionell angebrachten Angußbohrungen in Eingriff gebracht werden, konventionell ausgebildet und angeordnet sind.

Die Erfindung ist in der Zeichnung anhand von Ausführungsbeispielen erläutert.

Es zeigen:

| | |
|---|---|
| Fig. 1 | in perspektivischer Ansicht eine Werkzeugaufnahme für eine Bodenstempelplatte mit einer Bodenstempelplatte, |
| Fig. 2 | einen Schnitt gemäß II-II in Figur 1, wobei zusätzlich im Schnitt eine Werkzeugaufnahme für eine Gegenstempelplatte mit einer Gegenstempelplatte dargestellt ist, |
| Fig. 3a,3b | in Draufsicht jeweils eine Laufsohle, |
| Fig. 4 | in perspektivischer Ansicht eine Werkzeugaufnahme für ein Paar Seitenformteile mit den Seitenformteilen, |
| Fig. 5 | eine schematische Werkzeugstation mit zwei Leisten, einem Seitenrahmen und einer Bodenstempelplatte auf einer Werkzeugaufnahme, die mit Kniehebeln bewegt wird, |
| Fig. 6 | eine Werkzeugstation wie unter Fig. 5, jedoch mit einer zusätzlichen Werkzeugaufnahme, die einerseits einen Gegenstempel und andererseits eine Platte zum Formen der Schaftsohle aufweist, |
| Fig. 7a | eine Werkzeugstation wie unter Fig. 5 und Fig. 6 beschrieben, zusätzlich ein zweiter Rahmen zur Aufnahme weiterer Seitenformteile, unterhalb der die vorher beschriebenen Seitenformteile angeordnet sind, |
| Fig. 7b | eine Seitenansicht der Fig. 7a, um |

die übereinander angeordneten Seitenrahmenteile dazustellen,

Fig. 8 eine Werkzeugstation nach Fig. 5, 6, 7a, geführt auf einem Maschinenbett, so daß eine Transferstraßenanlage erstellt ist,

Fig. 9 eine Werkzeugstation, die jedoch im Gegensatz zu Fig. 5, 6, 7a einen nicht höhenverschiebbaren Leistendrehkörper aufweist, sondern eine Werkzeugaufnahme für die Seitenrahmen, die höhenverstellbar ausgeführt sind.

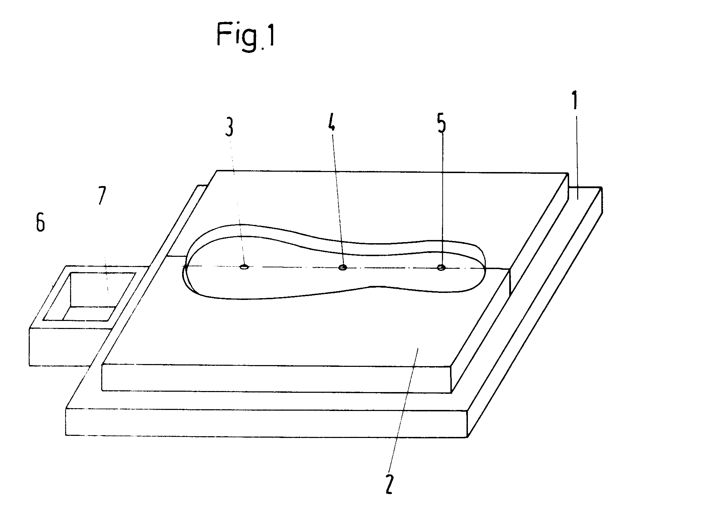

Die Figur 1 zeigt in perspektivischer Darstellung eine Werkzeugaufnahme 1 für eine Bodenstempelplatte 2, die im Bereich der Lauffläche der zu formenden Laufsohle drei Angußbohrungen 3, 4 und 5 hat.

Die Werkzeugaufnahme läuft in einen Ansatz 6 mit dem Durchbruch 7 aus.

Der Durchbruch 7 - dies gilt für sämtliche Werkzeugaufnahmen - dient zum Führen der Werkzeugaufnahme auf einem Führungsprofil (Führung), so daß die Werkzeuge in die entsprechenden Arbeitsstellungen und Offenstellungen durch Verschieben der Werkzeugaufnahmen auf der Führung bringbar sind.

Die Werkzeugaufnahmen sind im Prinzip Rahmen, in die die Werkzeuge eingesetzt bzw. in ihnen, wie zum Beispiel die Seitenformteile, verschiebbar angeordnet sind.

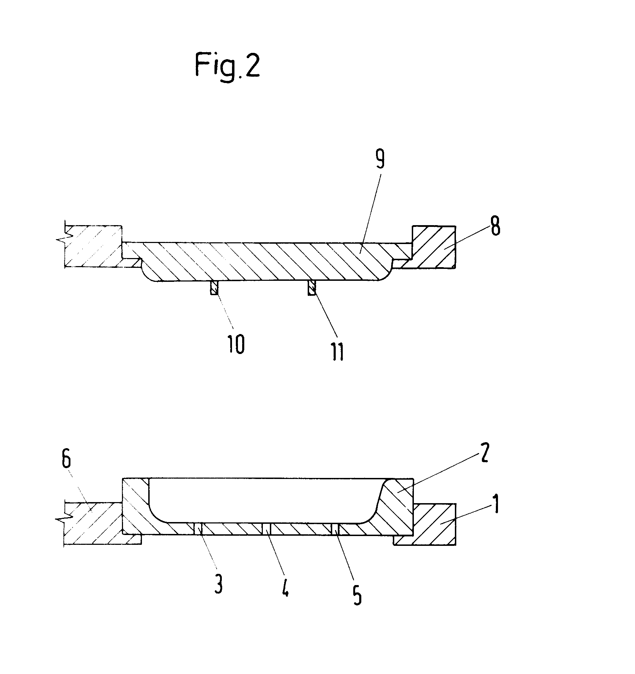

Diese rahmenartige Ausbildung der Werkzeugaufnahmen ist aus Fig. 2 ersichtlich. Aus Fig. 2 ist weiterhin ohne weiteres ersichtlich, daß durch die Anordnung der Angußbohrungen im Bereich der Lauffläche der zu formenden Laufsohlen die Strömungs- bzw. Fließwege des plastifizierten Materials innerhalb des geschlossenen Werkzeuges viel geringer sind als bei der konventionellen Anordnung der Angußbohrungen. In Fig. 2 ist oberhalb der Werkzeugaufnahme für die Bodenstempelplatte eine weitere Werkzeugaufnahme 8 für eine Gegenstempelplatte 9 mit den zwei Stegen 10 und 11 angeordnet.

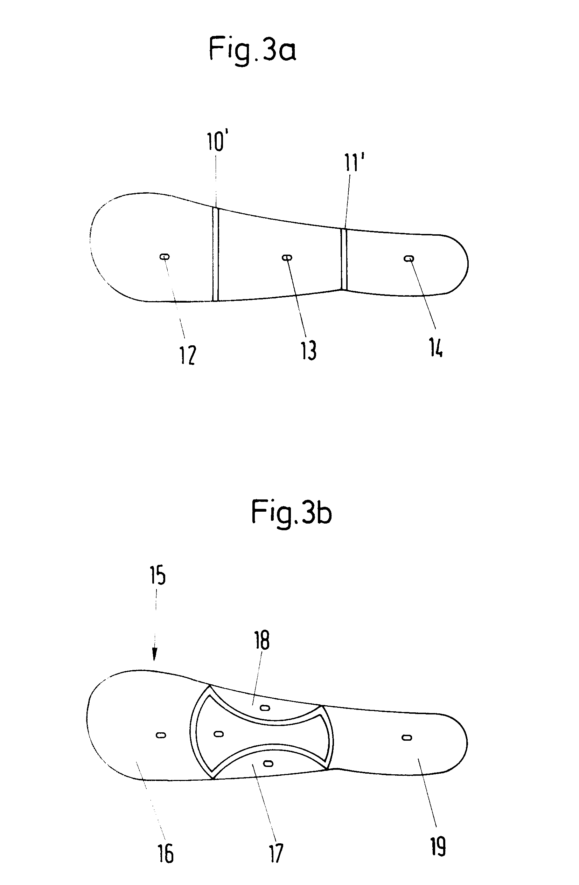

In der Schließstellung begrenzen die Bodenstempelplatte und die Gegenstempelplatte drei Abschnitte bzw. Räume zum Formen von drei voneinander distanzierten Bereichen der Laufsohle, die in der Figur 3a mit 12, 13 und 14 bezeichnet sind und durch die den Stegen 10 und 11 entsprechenden Aussparungen 10' und 11' voneinander getrennt sind. Beim Formen der Zwischensohle - der Sohle zwischen dem Schaftboden und der Laufsohle - dringt Material der zu formenden Zwischensohle in diese Aussparungen ein und füllt sie bis zur Lauffläche der Laufsohlenabschnitte aus.

In Fig. 3a sind strichliert die Angußbohrungen 3, 4 und 5 eingezeichnet.

Es ist prinzipiell möglich, für den Absatzbereich 14 der Laufsohle ein thermoplastisches Material größerer Abriebfestigkeit als für die anderen Bereiche 12 und 13 zu verwenden. Es ist weiterhin möglich, an der Gegenstempelplatte nur einen Steg vorzunehmen, so daß die gemäß Fig. 3b geformte Laufsohle 15 aus den vier Bereichen 16, 17, 18 und 19, die durch die von den Stegen gebildete Aussparung voneinander getrennt sind und die ebenfalls beim Formen der Zwischensohle vom Material der Zwischensohle gefüllt wird. Strichliert sind ebenfalls die den Bereichen zugeordneten, jedoch nicht bezifferten Angußbohrungen eingezeichnet.

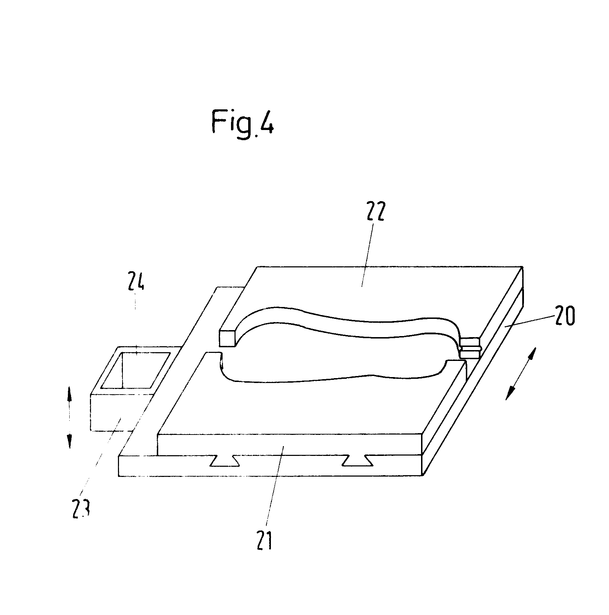

Die Fig. 4 zeigt ebenfalls in perspektivischer Darstellung eine Werkzeugaufnahme 20 für ein Paar in ihr verschiebbar geführter Seitenformteile 21 und 22. Die Werkzeugaufnahme läuft ebenfalls in einem Ansatz 23 mit einem Durchbruch 24 aus.

Die beiden Seitenformteile sind mittels Schwalbenschwanzführungen 25 und 26 in der Werkzeugaufnahme geführt, die ebenfalls rahmenartig ausgebildet ist, so daß in der Schließstellung der Seitenformteile von unten zum Beispiel die Bodenstempelplatte gegen sie bis zum Anschlag hochgefahren werden kann.

Zum Verschieben der beiden Seitenformteile können an sie angelenkte Pneumatikzylinder (nicht dargestellt) vorgesehen sein.

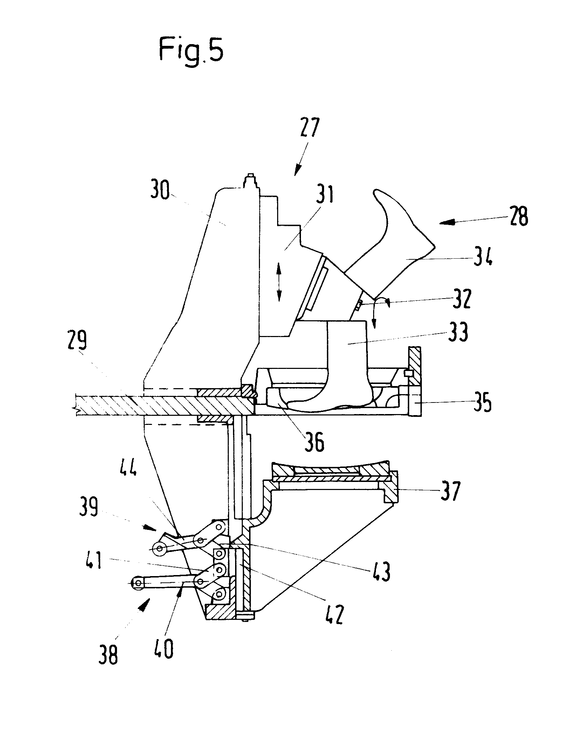

Die Fig. 5 zeigt schematisch und im Ausschnitt eine von mehreren Werkzeugstationen 27 an Drehtischanlagen, von denen jedoch nur die eine Werkzeugstation 28 dargestellt ist. Auf dem Tisch 29, der im Ausschnitt und geschnitten dargestellt ist, ist das Bauteil 30 angeflanscht, das höhenverstellbar den Drehkopf 31 führt, dessen verdrehbarer konusartige Abschnitt 32 in an sich bekannter Weise die beiden Leisten 33 und 34 aufweist. An dem Tisch ist eine konventionelle Werkzeugaufnahme 35 für ein Paar Seitenformteile angeflanscht, von denen nur das eine mit 36 bezeichnete sichtbar ist.

Die Werkzeugstation weist unterhalb des Tisches und an dessen Rand eine Führung bzw. ein Führungsprofil für die weiter oben prinzipiell beschriebenen Werkzeugaufnahmen 37 für die Bodenstempelplatte 2 (vgl. Fig. 2) auf. Zum Höhenverstellen bzw. Absenken der Werkzeugaufnahme 37 sind die beiden Kniehebel 38 und 39 vorgesehen.

Der Kniehebel 38 besteht aus der abgekröpften Lasche 40, die einerseits an der Führung und unter Ausbildung eines zweiarmigen Hebels an dem einen Endabschnitt der Lasche 41 angelenkt ist, deren anderer Endabschnitt an dem auf der Führung verschiebbarem Schlitten 42 angelenkt ist.

An dem Schlitten 42 ist der eine Endabschnitt der Lasche 43 des Kniehebels 39 angelenkt, deren anderer Endabschnitt an der abgekröpften Lasche 44 unter Ausbildung ebenfalls eines zweiarmigen Hebels angelenkt ist. Der eine Endabschnitt dieses zweiarmigen Hebels ist an einem Ansatz des Werkzeugträgers angelenkt.

Durch Betätigen der freien Schenkel der abgekröpften Laschen wird die Werkzeugaufnahme nach oben verschoben und der Formenraum für das Formen der Laufsohle gebildet.

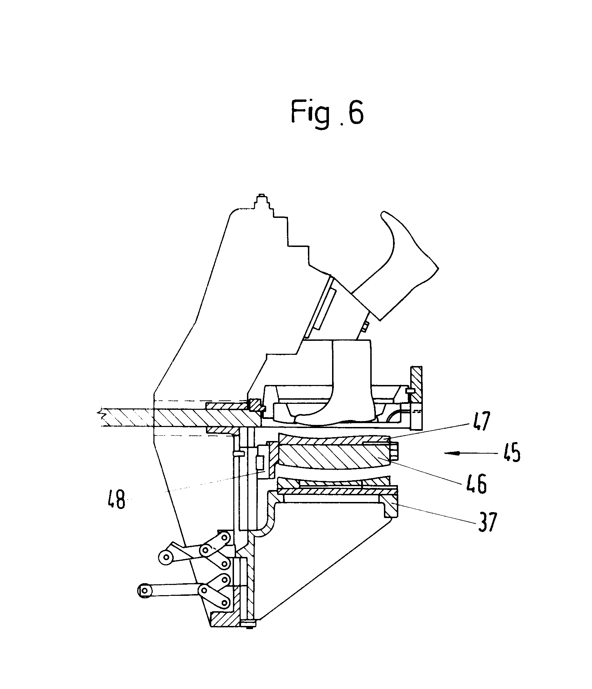

Die Fig. 6 zeigt in der Darstellung der Fig. 5 ein weiteres Ausführungsbeispiel für eine Werkzeugstation. Gleiche Teile sind mit gleichen Bezugszeichen bezeichnet.

Zum Unterschied zur Werkzeugstation der Fig. 5 zeigt die Werkzeugstation in Fig. 6 zusätzlich unterhalb der Seitenformteile und oberhalb der Werkzeugaufnahme 37 eine weitere Werkzeugaufnahme 45 höhenverstellbar angeordnet, die eine mit der Bodenstempelplatte zusammenarbeitende erste Gegenstempelplatte 46 und eine mit einem Schuhschaft zusammenarbeitende zweite Gegenstempelplatte 47 aufweist.

Nach dem Zufahren des Werkzeuges dient die erste Gegenstempelplatte 46 zum Formen der Laufsohle und die zweite Gegenstempelplatte 47 zum Formen der Schaftsohle an den Schaft.

Anschließend wird durch Betätigen der Kniehebel das Werkzeug in die aus Fig. 6 ersichtliche Position gebracht, so daß die Gegenstempelplatten außer Eingriff mit den anderen Werkzeugteilen gelangen. Die Werkzeugaufnahme 45 weist senkrecht zur Zeichenebene eine Führung 48 auf, auf der die beiden Gegenstempelplatten als Baueinheit aus der Zeichenebene so verfahren werden, daß nach dem Zufahren des Werkzeuges zwischen der Laufsohle und der Schaftsohle ein Raum begrenzt wird, der zum Formen einer die Schaft- und die Laufsohle verbindenden Zwischensohle dient.

Die Fig. 7a zeigt eine weitere Abwandlung der Werkzeugstation nach Fig. 5 bzw. Fig. 6 in der gleichen Darstellung.

Der Unterschied besteht darin, daß zwei Paar Seitenformteile 49 und 50 übereinander angeordnet sind.

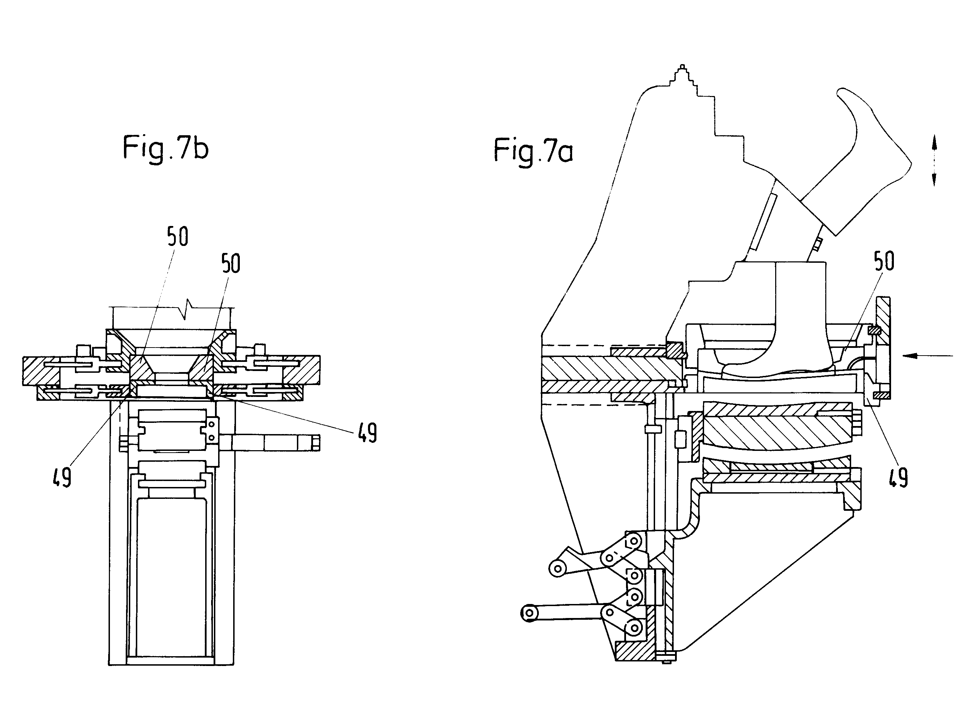

Die Fig. 7b zeigt eine Ansicht in Richtung des Pfeils der Figur 7a.

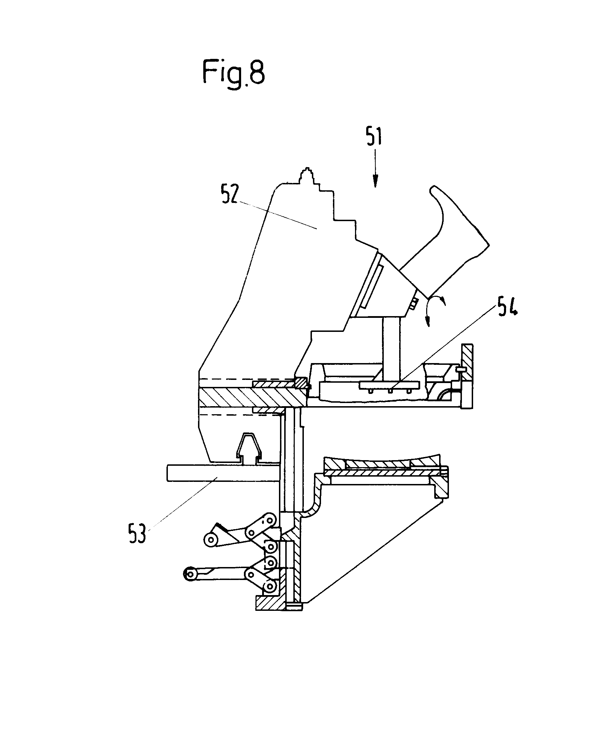

Die Fig. 8 zeigt in der Darstellung der Figuren 5 bis 7a eine Transferstraße 51 mit mehreren Werkzeugstationen, von denen nur eine mit 52 bezeichnete Werkzeugstation dargestellt ist.

Anstelle des Drehtisches ist ein Maschinenbett 53 vorgesehen, auf dem die Werkzeugstation 52 taktweise verschoben wird.

Ein weiterer Unterschied zu den Figuren 5 bis 7a besteht darin, daß ein Leisten durch ein Gegenstempel 54 ersetzt ist, mit dem wie in den Figuren 1 und 2 beschrieben zunächst eine Laufsohle geformt wird.

Nach dem Austausch des Gegenstempels gegen den Leisten mit dem aufgeleisteten Schuhschaft wird das Werkzeug wieder in die Schließstellung gebracht, wobei der Formenraum für die zu bildende Zwischensohle gebildet wird, die in an sich bekannter Weise geformt wird.

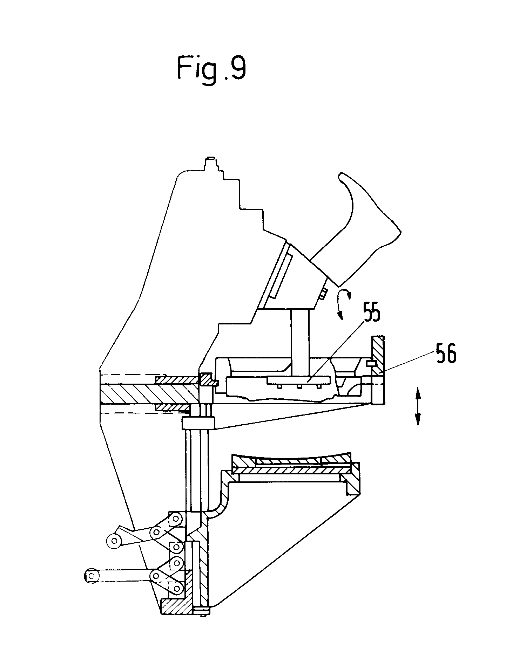

Die Fig. 9 zeigt in der Darstellung der Figuren 5 und 6 ebenfalls eine Werkzeugstation, deren Drehkopf anstelle des einen Leistens einen Gegenstempel 55 aufweist und der eine höhenverstellbare Werkzeugaufnahme 56 für die Seitenformteile hat. Aus diesem Grund ist es nicht mehr erforderlich, den Drehkopf höhenverstellbar auszubilden.

Zwischen den Werkzeugaufnahmen und in den Ausführungsbeispielen der Figuren 1 bis 9 sind Druckfedern angeordnet, deren Federkräfte so ausgelegt sind daß beim Betätigen der Kniehebel die Werkzeugaufnahmen problemlos außer bzw. in Eingriff gelangen.

**Patentansprüche**

1.   Verfahren zum Anformen von eine Laufsohle und mindestens eine Zwischensohle aufweisenden Schuhsohlen an Schuhschäfte, wobei die Laufsohle in Felder unterteilt ist, dadurch gekennzeichnet, daß in einem ersten Verfahrensschritt die zueinander distanzierten Felder der Laufsohle über Angußbohrungen im Bereich der Lauffläche der zu formenden Felder geformt werden und in einem zweiten Verfahrensschritt in dem zwischen dem Schaft und den Feldern der Laufsohle gebildeten Zwischenraum, sowie in den Zwischenräumen zwischen den Feldern die Zwischensohle geformt wird.

2.   Verfahren zum Anformen von eine Laufsohle und mindestens eine Zwischensohle aufweisenden Schuhsohlen an Schuhschäfte, wobei die Laufsohle in Felder unterteilt ist, dadurch gekennzeichnet, daß in einem ersten Verfahrensschritt die zueinander distanzierten Felder der Laufsohle über Angußbohrungen im Bereich der Lauffläche der zu formenden Felder geformt werden und an den Schuhschaft die Schaftsohle angeformt wird und in einem zweiten Verfahrensschritt in dem zwischen der Schaftsohle und den Feldern der Laufsohle gebildeten Zwischenraum, sowie in den Zwischenräumen zwischen den Feldern die Zwischensohle geformt wird.

3.   Verfahren zum Anformen von eine Laufsohle und mindestens eine Zwischensohle aufweisenden Schuhsohlen an Schuhschäfte, wobei die Laufsohle Durchbrüche aufweist, dadurch gekennzeichnet,

daß in einem ersten Verfahrensschritt die Durchbrüche aufweisende Laufsohle über Angußbohrungen im Bereich der Lauffläche der zu formenden Laufsohle geformt wird und in einem zweiten Verfahrensschritt in dem zwischen dem Schaft und der Laufsohle gebildeten Zwischenraum und in den Durchbrüchen die Zwischensohle geformt wird.

4.  Verfahren zum Anformen von eine Laufsohle und mindestens eine Zwischensohle aufweisenden Schuhsohlen an Schuhschäfte, wobei die Laufsohle Durchbrüche aufweist, dadurch gekennzeichnet, daß in einem ersten Verfahrensschritt die Durchbrüche aufweisende Laufsohle über Angußbohrungen im Bereich der Lauffläche der zu formenden Laufsohle geformt wird und die Schaftsohle an den Schaft angeformt wird und in einem zweiten Verfahrensschritt in den zwischen der Schaftsohle und der Laufsohle gebildeten Zwischenraum und in den Durchbrüchen die Zwischensohle geformt wird.

5.  Werkzeug, insbesondere zum Durchführen des Verfahrens nach Anspruch 1 oder Anspruch 2, wobei das Werkzeug einen höhenverstellbaren Drehkopf mit mindestens einem Leisten und gegebenenfalls einem Gegenstempel, mit mindestens zwei Seitenformteilen sowie mit einem Werkzeugteil zum Formen der Laufsohlen aufweist, dadurch gekennzeichnet, daß unterhalb der Seitenformteile eine höhenverstellbare Werkzeugaufnahme für das Werkzeugteil zum Formen der Laufsohlen angeordnet ist, das Werkzeugteil eine Bodenstempelplatte ist und der Boden der Bodenstempelplatte mindestens eine Angußbohrung im Bereich der Lauffläche der zu formenden Laufsohle aufweist.

6.  Werkzeug nach Anspruch 5, dadurch gekennzeichnet, daß der Gegenstempel Stege aufweist, die mit der Bodenstempelplatte den Formenraum für die zu bildende Laufsohle in eine vorgegebene Anzahl von Bereichen unterteilen, wobei in jeden Bereich mindestens eine der Angußbohrungen der Bodenstempelplatte mündet.

7.  Werkzeug, insbesondere zum Durchführen des Verfahrens nach Anspruch 3 oder 4, wobei das Werkzeug einen höhenverstellbaren Drehkopf mit mindestens einem Leisten und gegebenenfalls mit mindestens einem Gegenstempel, mindestens zwei Seitenformteile und ein Werkzeugteil zum Formen der Laufsohlen aufweist, dadurch gekennzeichnet, daß unterhalb der Seitenformteile eine höhenverstellbare Werkzeugaufnahme für in eine in ihr verschiebbare bzw. verschwenkbare Zwischenplatte angeordnet ist, unterhalb der höhenverstellbaren Werkzeugaufnahme für die Zwischenplatte eine höhenverstellbare Werkzeugaufnahme für das Werkzeugteil zum Formen der Laufsohlen angeordnet ist, das Werkzeugteil eine Bodenstempelplatte ist und der Boden der Bodenstempelplatte mindestens eine Angußbohrung aufweist und im Bereich der Lauffläche der zu formenden Laufsohle.

8.  Werkzeug nach Anspruch 7, dadurch gekennzeichnet, daß der Gegenstempel Stege aufweist, die mit der Bodenstempelplatte den Formenraum für die zu bildende Laufsohle in eine vorgegebene Anzahl von Bereichen unterteilen, wobei in jeden Bereich mindestens eine der Angußbohrungen der Bodenstempelplatte mündet.

9.  Werkzeug nach einem der Ansprüche 5 bis 7, dadurch gekennzeichnet, daß die Seitenformteile in einer höhenverstellbaren Werkzeugaufnahme angeordnet sind.

10. Werkzeug nach einem der Ansprüche 5 bis 8, dadurch gekennzeichnet, daß die höhenverstellbaren Werkzeugaufnahmen für die Bodenplatte, die Zwischenplatte und die Seitenformteile auf einer gemeinsamen Führung angeordnet sind.

11. Werkzeug nach Anspruch 9 oder 10, dadurch gekennzeichnet, daß auf der Führung zwischen den Werkzeugaufnahmen jeweils eine Druckfeder angeordnet ist und mindestens die Werkzeugaufnahme für die Bodenplatte einen Antrieb aufweist.

12. Werkzeug nach Anspruch 11, dadurch gekennzeichnet, daß der Antrieb ein pneumatischer Zylinder, hydraulischer Zylinder bzw. ein Kniehebel ist.

13. Anlage zum Anformen von Schuhsohlen mit mindestens einem Werkzeug nach einem der Ansprüche 5 bis 12, dadurch gekennzeichnet, daß die Anlage einen Drehtisch aufweist, eine vorgegebene Anzahl von Arbeitsstationen mit Werkzeugen hat, für den höhenverstellbaren Drehkopf eines jeden Werkzeuges ein auf dem Drehtisch angeordnetes Bauteil und am Drehtisch eine Führung für die Werkzeugaufnahmen vorgesehen ist.

**14.** Anlage zum Anformen von Schuhsohlen mit mindestens einem Werkzeug nach einem der Ansprüche 5 bis 11,
dadurch gekennzeichnet,
daß die Anlage eine Fertigungsstraße ist, eine vorgegebene Anzahl von Arbeitsstationen mit Werkzeugen hat, der höhenverstellbare Drehkopf eines jeden Werkzeuges an einem Bauteil der Arbeitsstation befestigt ist und unterhalb des Bauteils die Führung für die Werkzeugaufnahmen angeordnet ist.

**15.** Werkzeugstation für Drehtischanlagen bzw. Fertigungsstraßen zum Anformen von eine Laufsohle und mindestens eine Zwischensohle aufweisenden Sohlen an Schuhschäfte, wobei die Werkzeugstation einen Leistendrehkopf mit mindestens einem Leisten und gegebenenfalls einen Gegenstempel, sowie mindestens ein Paar Seitenformteile und ein Werkzeugteil zum Formen der Laufsohlen hat,
dadurch gekennzeichnet,
daß die Werkzeugstation unterhalb des um seine Achse verschwenkbaren Drehkopfes eine Werkzeugaufnahme für die Seitenformteile und eine Werkzeugaufnahme für das Werkzeugteil zum Formen der Laufsohle hat und die Werkzeugaufnahmen auf einem Führungsprofil der Werkzeugstation höhenverstellbar angeordnet sind.

**16.** Werkzeugstation für Drehtischanlagen bzw. Fertigungsstraßen zum Anformen von eine Laufsohle und mindestens eine Zwischensohle aufweisenden Sohlen an Schuhschäfte, wobei die Werkzeugstation einen Leistendrehkopf mit mindestens einem Leisten und gegebenenfalls einen Gegenstempel, sowie mindestens ein Paar Seitenformteile und ein Werkzeugteil zum Formen der Laufsohlen hat,
dadurch gekennzeichnet,
daß die Werkzeugstation unterhalb des höhenverstellbaren und um seine Achse verschwenkbaren Drehkopfes eine auf einem Führungsprofil der Werkzeugstation arretierbare Werkzeugaufnahme für die Seitenformteile hat, eine Werkzeugaufnahme für das Werkzeugteil zum Formen der Laufsohle hat und die Werkzeugaufnahme für das Werkzeugteil zum Formen der Laufsohlen auf dem Führungsprofil der Werkzeugstation höhenverstellbar angeordnet ist.

**17.** Werkzeugstation nach Anspruch 14 oder 15,
dadurch gekennzeichnet,
daß das Werkzeugteil zum Formen der Laufsohlen eine Bodenstempelplatte mit mindestens einer in dem Boden der Bodenstempelplatte angeordneten Angußbohrung im Bereich der Laufläche ist.

**18.** Werkzeugstation nach einem der Ansprüche 14 bis 16,
dadurch gekennzeichnet,
daß zwischen den Seitenformteilen bzw. zwischen der Werkzeugaufnahme für die Seitenformteile und der Werkzeugaufnahme für die Bodenstempelplatte eine weitere Werkzeugaufnahme für eine Zwischenplatte zum Anformen einer Schaftsohle an einen Schuhschaft und zum Formen einer Laufsohle mit der Bodenstempelplatte angeordnet ist und daß die Zwischenplatte in ihrer Werkzeugaufnahme durch Verschwenken oder Verschieben in bzw. außer Eingriff mit anderen Werkzeugteilen bringbar ist.

Fig.1

# Fig.2

# Fig.3a

# Fig.3b

# Fig.4

# Fig.5

# Fig .6

47

45

46

48

37

Fig.7b

Fig.7a

50

50

50

49

49

49

EP 0 487 827 A2

17

Fig.8

Fig.9